# EUROPEAN PATENT SPECIFICATION

(11) **EP 0 336 104 B1**
(45) Date of publication and mention of the grant of the patent: **26.07.1995**
(21) Application number: 89103428.2
(22) Date of filing: 27.02.1989
(51) Int. Cl.: G06F 15/02

(54) **Electronic device for storing and displaying information**
Elektronische Anlage zur Speicherung und Anzeige von Informationen
Dispositif électronique pour l'emmagasinage et l'affichage d'informations

(30) Priority: 26.02.1988 JP 44774/88
(43) Date of publication of application: 11.10.1989
(73) Proprietor: SHARP KABUSHIKI KAISHA, Osaka 545 (JP)
(72) Inventor: Matsuda, Eichika, Yamatotakada-shi Nara-ken (JP); Oba, Toshiro, Nara-shil Nara-ken (JP)
(74) Representative: TER MEER STEINMEISTER & PARTNER GbR

(56) References cited:
- EP-A- 0 264 098
- FR-A- 2 568 396
- GB-A- 2 156 560
- US-A- 4 117 542

## Description

### BACKGROUND OF THE INVENTION

### 1. Field of the Invention

The present invention relates to an electronic device and more particularly to a small-sized electronic device such as an electronic memorandum, an autodialer or the like, which is capable of displaying various information as well as performing storage and recall of character information and numeral information.

### 2. Description of the Prior Art

In a small-sized electronic equipment of this type, it is essential that both character information and numeral information sometimes be displayed simultaneously. It is well known that a dot matrix type display unit has been used to display numerical information and a segment type display unit has been used to display numeral information. However, in a conventional small-sized electronic device, a dot matrix type display unit consisting of, for example, 7x5 dot composition is generally used when both character information and numeral information are displayed, because the segment type display unit is not suitable for display of character information.

An example of a small-sized electronic device which is capable of storing character information and numeral information in the main body thereof is the "ELECTRONIC POCKET DIRECTORY" disclosed in U.S. Pat. No. 4,117,542.

Also, in such a small-sized electronic device, the area of display is generally limited, for example, to twelve digits in a dot matrix type display unit. Accordingly, when a telephone number (numeral information) which has an extended number of digits, is input or when a telephone number having an extended number which has been stored in the main body are accessed, there is the problem that the telephone number overflows the display. That is, when the telephone number is caused to scroll in one direction, the numeral at the head disappears from the display portion; thus it is difficult or impossible to input a telephone number or confirm the contents that have been input previously. Also, when a telephone number having extended digits is accessed, it is impossible to display, in a list, the whole of that telephone number by the display portion alone.

An electronic device having identically the features a) to c) of appended claim 1 and having features similar to the features d) to f) of this claim is known from the U.S. patent US-A-4,117,542. This device comprises three display lines of the same display type, e. g. as a dot matrix display or as a segmented display. When information is entered, e. g. a name at first, then this information is displayed in the lowermost display. It is shifted to the middle display when the next information, e. g. a telephone number, is entered. Finally, it is shifted to the upper display when a last information, e. g. an address, is entered.

An electronic device having identically the features a) to f) of appended claim 1, and having a conversion means similar to that one of feature h) of this claim, is described in the document GB-A-2 156 560. This device comprises three display lines whereby the uppermost is of dot matrix type and the two below are of segment display type. Numeral information may be displayed either in one of the segmented lines, or, after conversion, in the dot matrix line.

### SUMMARY OF THE INVENTION

It is the object of the invention to provide an electronic device having a dot matrix display part and a segment display part which is arranged to display numeral information which has more digits than are provided within said segment display part.

The electronic device of the invention is defined by the teaching of appended claim 1.

According to one embodiment of the present invention, when numeral information exceeds a predetermined character number of the segment display portion, when it is input from the input means, or when a display change-over instruction is input after the numeral information which exceeds a predetermined character number when it is read from the storage means and displayed on the display means, the numeral information already displayed on the segment display portion is converted to dot matrix display information by the conversion means and transferred to the dot matrix display portion. Then, the input numeral information which exceeds the predetermined character number of the segment display portion or the numeral information which exceeds the predetermined character number of the segment display portion can be displayed on the segment display portion which has become an empty area due to transfer. With this, it is possible to display numeral information which consists of a plurality of lines in a list on the display means.

According to an embodiment of the present invention, the dot matrix display information may be processed with an MPU of 4-bit composition. Therefore, it is possible to consider cost reduction of the MPU and compose the RAM with a smaller storage capacity.

Furthermore, even if the input numeral information exceeds the predetermined character number of the segment display portion, the numeral information may be displayed in a list by utilizing the dot matrix display portion. Therefore, even numeral information having many digits may be input with simultaneous confirmation. Also, when numeral information is read, numeral information which is not displayed on the segment display portion may be displayed in a list by splitting the information between the dot matrix display portion and the segment display portion, respectively.

### DESCRIPTION OF THE DRAWINGS

Fig. 1 is a front view of an autodialer showing an embodiment of the present invention;
Fig. 2 is a rear view of Fig. 1;
Fig. 3 is a block diagram of the autodialer shown in Fig. 2;
Figs. 4 (a) to (e) are explanatory views showing a display processing method in this embodiment;
Fig. 5 is a flow chart of the embodiment;
Fig. 6 shows explanatory views of display processing of name data and telephone number data in the embodiment; and
Fig. 7 shows explanatory views showing processing of display in a list of telephone number data in the embodiment.

### DESCRIPTION OF THE PREFERRED EMBODIMENTS

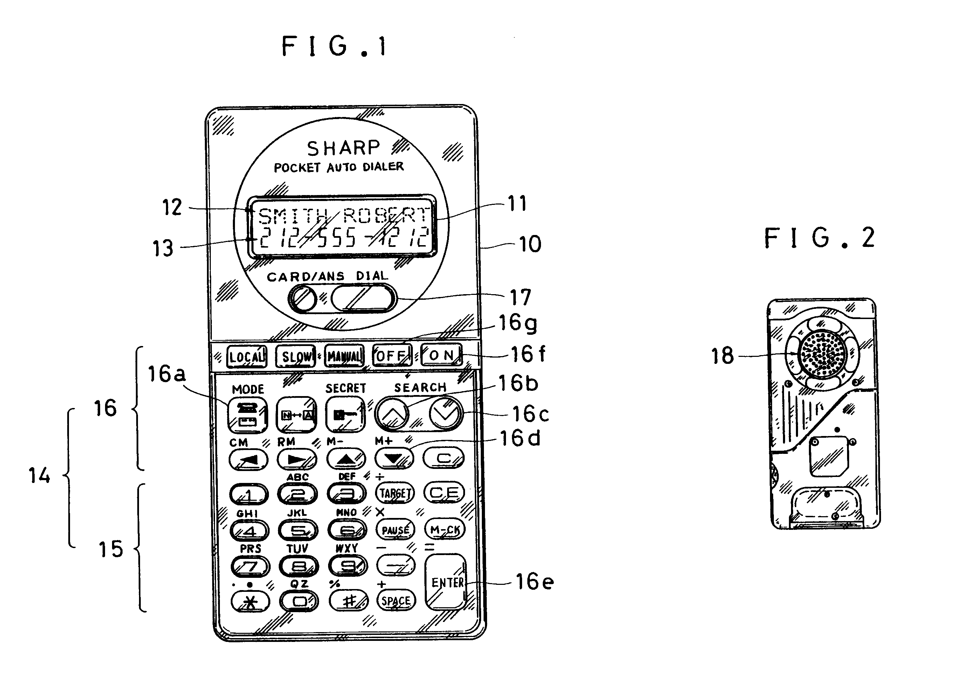

In Fig. 1 and Fig. 2, this autodialer has a telephone directory function, a tone dialling function for telephone calls, and a desk calculator function. These functions are selected by means of a mode switching key.

In Fig. 1, a reference numeral 10 denotes a main body which is portable, and about the size one can carry in the palm of one's hand, and 11 denotes an LCD as the display means. This LCD is composed of a dot matrix display portion 12 for displaying mainly a name as character information from the alphabet and a segment display portion 13 for displaying mainly telephone numbers and symbols as numeral information. This LCD 11 may be composed of LEDs. The dot matrix display portion 12 is able to display a character of up to 12 digits, and the segment display portion 13 is able to display a telephone number of up to 12 digits. However, the display of a hyphen "-" is handled as one digit in a telephone number.

14 denotes a key input portion as the input means, and this key input portion 14 is provided with alphabet keys and register keys and is composed of input keys 15 for inputting names and telephone numbers and function keys 16 for setting and selecting various instructions and various modes.

The input keys 15 function in such a manner that, in the telephone directory input mode, the character "A" ABC may be input when 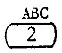 key is pushed once and the character "B" may be input when the same key is pushed twice. Also, the input keys 15 function so as to input a numeral when the arithmetic mode of a desk calculator is selected.

A mode switching key 16a is used principally for switching between the telephone directory function and the desk calculator function. SEARCH keys 16b and 16c are used for recalling names and telephone numbers from storage, respectively, when the telephone directory function is used. When G key 16c is pushed, stored names are recalled alphabetically, and when @key 16b is pressed, names are recalled in the reverse order. In addition, the contents stored by the telephone directory function are stored after being automatically rearranged in alphabetical order in the main body.

Also, when the initial character of a name is input and the @ key 16c or the 0 key 16b is pushed, it is possible to directly call the contents starting from that character in the array.

A ( key 16d is used when the contents cannot be displayed all at one time on the segment display portion 13. because the display digit number of the segment display portion 13 is exceeded are accessed. An ENTER key 16e is used when names and telephone numbers that are input in the telephone directory mode are stored. A DIAL key 17 is used to access and initiate the autodial function. As well, an ON key 16f and an OFF key 16g are used when the power supply of the main body 10 is put ON or OFF, respectively.

In Fig. 2, 18 denotes a speaker mounted on the main body 10, from which a two frequency tone as a call signal originates.

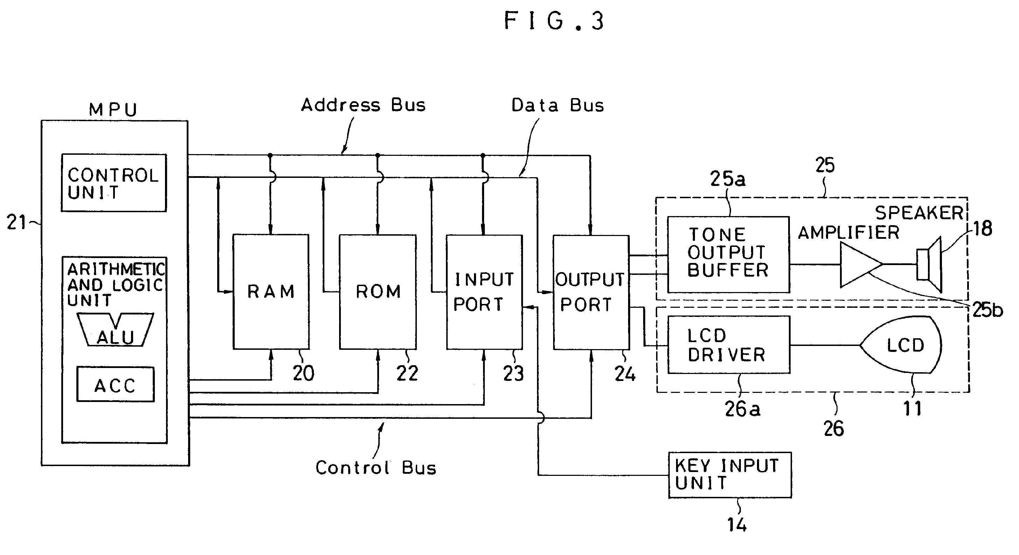

Fig. 3 is a block diagram showing the composition of this embodiment. In this figure, 20 denotes a RAM (hereafter referred to as a data buffer) as storage means, and the data buffer is provided with both a name data buffer and a telephone number data buffer for holding name data and telephone number data as they are input from the key input portion 14. Also, this data buffer 20 is provided with a dot matrix display buffer and a segment display buffer.

An MPU 21 functions as the read/write means, temporary storage means, display control means, decision means and conversion means and is of 4-bit composition. The functions of this MPU 21 will be explained in the case of copying name data and telephone number data to the display buffer.

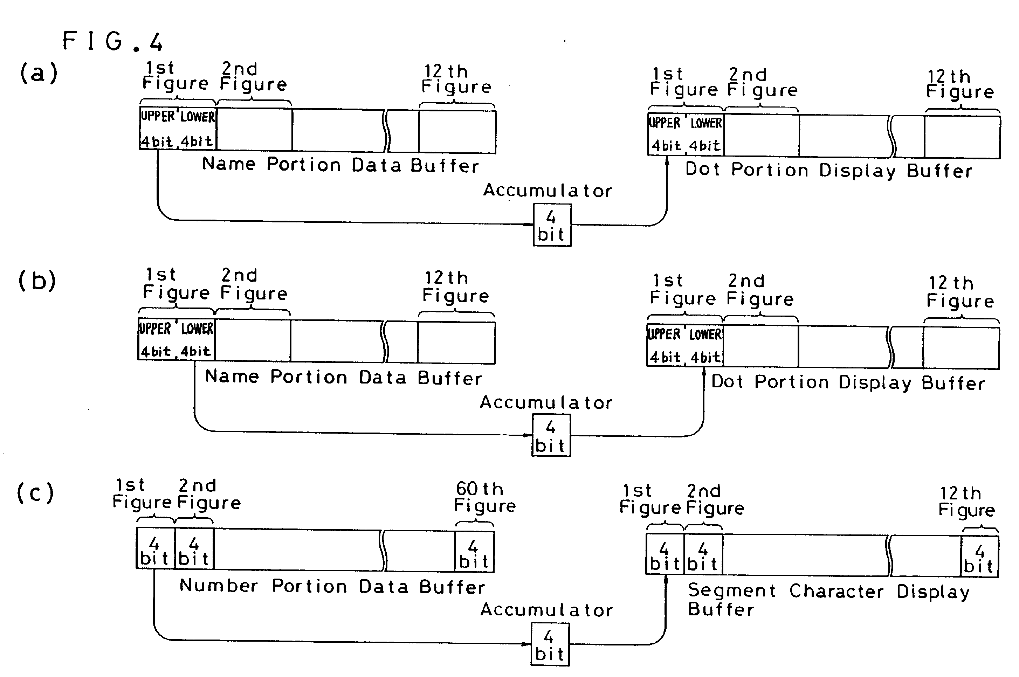

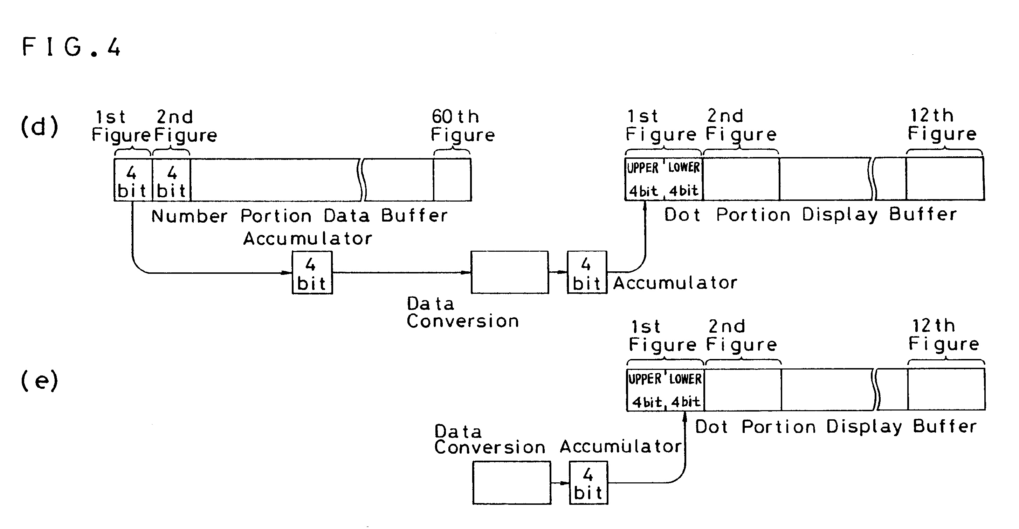

The data bus of the MPU 21 is of 4 bits, one data unit copied from the name data buffer to the dot matrix display buffer is of 8 bits. Accordingly, the name data composed of these 8 bits are copied by being divided into 4 bit groupings, one in the upper order and one of 4 bits in the lower order. In this case, copying is performed by means of an accumulator (ACC) which is a 4-bit register. Figs. 4 (a) and (b) show this process.

Then, when the telephone number data copied to the segment display buffer, processing is made by copying only once because one data of the telephone number data includes 4 bits. Fig. 4 (c) shows this process.

Finally, the case when the telephone number data is copied to the dot matrix display buffer will be explained. In this case, an operation of converting the telephone number data into dot matrix character data is included. First, the telephone number data is copied to the accumulator. Next, data conversion is performed by the accumulator, to create 8-bit data that corresponds to dot matrix character data. Furthermore, 4 bits in the upper order among the 8-bit data are copied to the dot matrix display buffer through the accumulator. (See Fig. 4 (d).) Then, the remaining 4 bits in the lower order are copied to the dot matrix display buffer through the accumulator in a similar manner as above. (See Fig. 4 (e).)

Data conversion is performed by a data conversion circuit composed of a shift register for expanding 4- bit data to 8-bit data and two 4-bit latches for holding the converted 8-bit data.

22 denotes a ROM in which a program for executing the function of the MPU 21 is loaded. 23 denotes an input port and 24 denotes an output port. The output port 24 is connected to an output unit 25, forming a voice coupler and a display unit 26. The output unit 25 is composed of a tone output buffer 25a generating a two frequency mixed tone which is a call signal, an amplifier 25b and a speaker 18. When the autodial function is to be used, the speaker 18 is applied to the mouthpiece of a telephone receiver and the dial key 17 is pushed. Then, the two frequency mixed tones are transmitted to the telephone line through the speaker 18, thus placing a call to the other party. Also, the display unit 26 is composed of an LCD driver 26a which generates both character and numeral information on an LCD picture plane and an LCD 11.

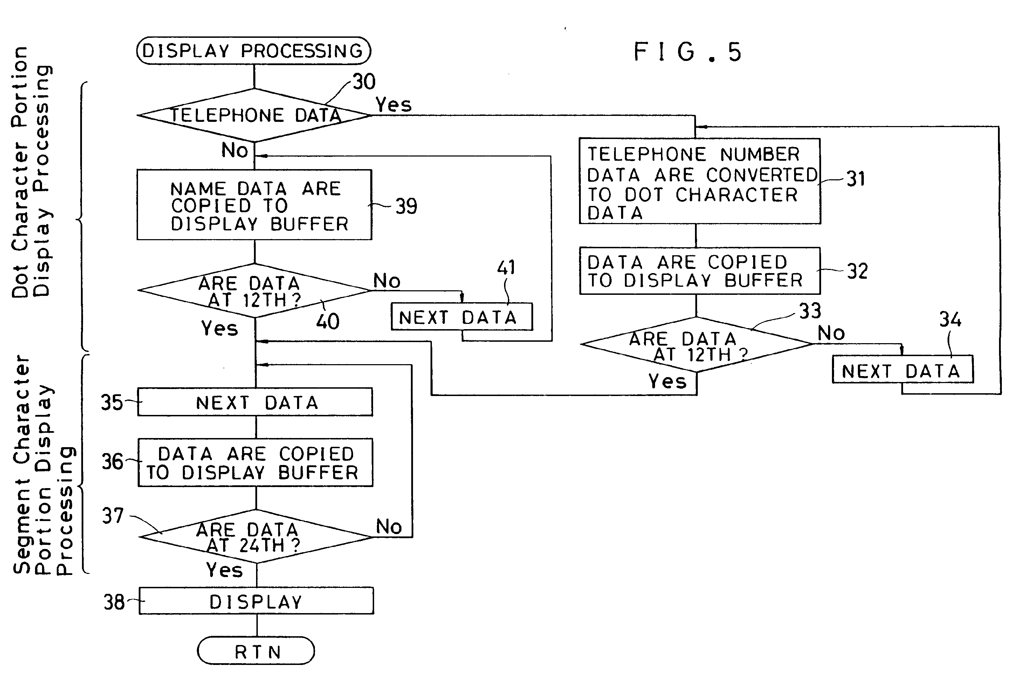

Now, the processing by the MPU 21 will be explained with reference to a flow chart shown in Fig. 5. The data in which telephone numbers of more than 12 digits are input in the telephone number directory mode will be taken as an example. The first case to be described is where display processing does not require scrolling and the second case is where display processing does require scrolling. However, first we will explain the various data structures of names and telephone numbers, in the device.

### Data structure

As to data structure, the name data includes an 8-bit code per data for handling each alphabetic character, numeral and symbol , and the telephone number data includes a 4-bit code per data for handling numerals and symbols.

### Display processing when scrolling is not applied

Display processing when scrolling is not applied will how be described. It is assumed that, for example, the telephone number of Mr. Robert Smith has been registered together with his name in the RAM 20.

The telephone number of Mr. Robert Smith is recalled and displayed through the following operation.

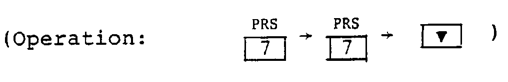

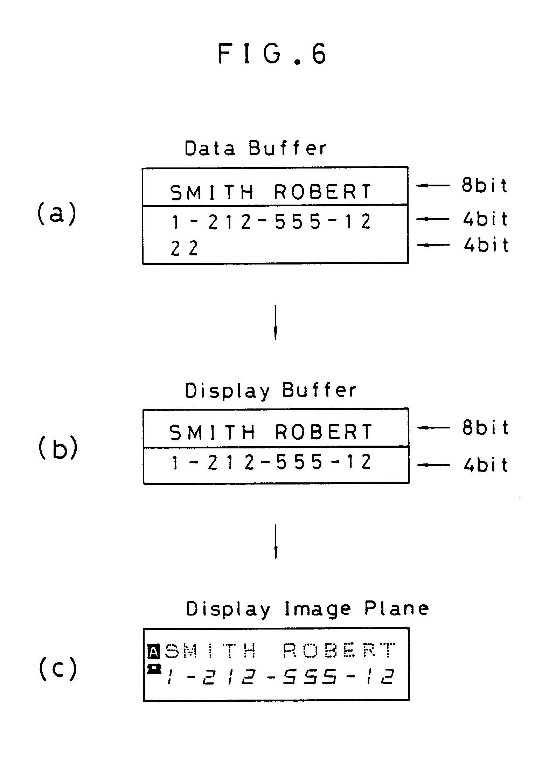

In the case of displaying data, the portion in the data buffer (RAM 20) which the MPU 21 is going to display is copied to the display buffer, and therefore display is based on the contents of the display buffer. Then, 12 digits of the name data are copied to the dot matrix buffer. At this time, one data includes 8 bits. Next, the first 12 digits of the telephone number data are copied to the segment display buffer. At this time, one data contains 4 bits. Finally, by means of display processing, the name data and the number data are displayed on the LCD 11, respectively. Figs. 6 (a) thru (c) show the procedure for such processing.

### Display processing when scrolling is applied

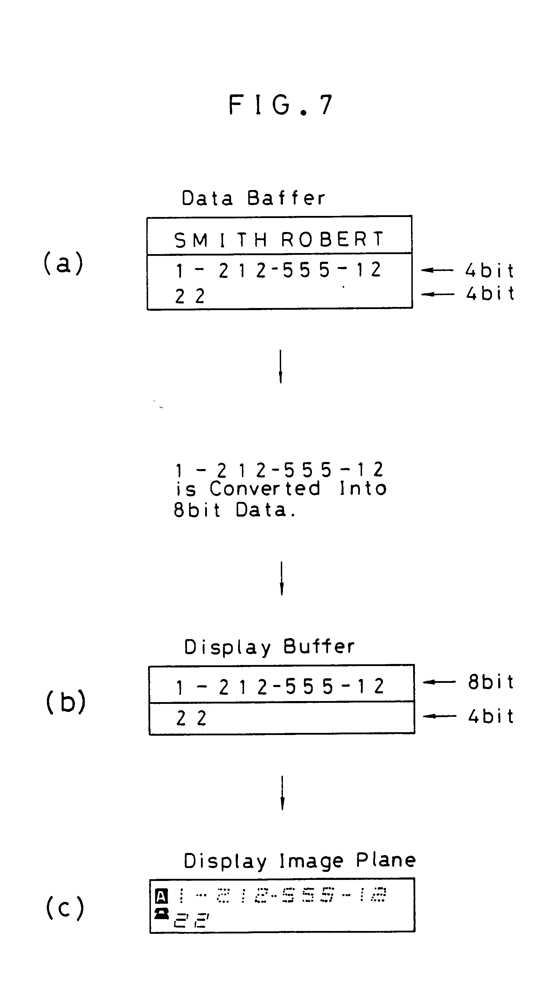

Display processing when scrolling is applied, which is the principal feature of this embodiment, will now be described. When reference is made to the data in the third column (in the data buffer) and at the same time not displayed in the LCD 11 by pushing the key 16d, it is judged that the telephone number data should be transferred to the dot matrix display portion 12 in the first column (step 30). It may be decided whether the name data or the telephone number data appear at the dot matrix display portion in the first column with the position indicated by a pointer by recording the pointer which shows the display range in the data buffer in advance. When it is determined that the telephone number data should appear on the dot matrix display portion, 4 bits of telephone number data are converted into 8 bit for the dot matrix display (step 31), and copied to the dot matrix display buffer (step 32). It is decided whether the data is at the 12th position in copying to the display buffer (step 33), and if the data is not at the 12th position, the next telephone number data is recalled (step 34) and returns to step 31. In step 33, when the data is at the 12th, namely when the dot matrix display conversion of the telephone number data in the second column of the data buffer is terminated, the telephone number data in the third column of the data buffer is called (step 35) and copied to the segment display buffer (step 36). In copying to the display buffer, it can be determined whether the telephone number data is at the 24th position (step 37), and if so, it can be regarded that processing has been terminated when the telephone number data is located at the 24th position. Display processing is performed, therefore, to display the whole telephone number data by splitting into two sections, one, the dot matrix display portion 12 and the other, segment display portion 13, respectively (step 38). When the telephone number data in the third column do not fill 24 digits, "space" is inserted for the short digit number so as to make the digit length exactly 24. Figs. 7 (a) thru (c) show the procedure for such processing.

As well, in step 30, if the telephone number data does not appear, namely if the name data appears instead, the name data is copied to the dot matrix display buffer (step 39), and it is determined whether the name data is at the 12th position (step 40). If the data is not at the 12th position, the next data is called (step 41) and processing returns to step 39, and if the data is at the 12th position, transfer is made to step 35.

## Claims

1. An electronic device with scrolling function, the device comprising:
a) input means (14) for inputting character information, numeral information and commands;
b) data storage means (20) for storing the character and numeral information in a readable form;
c) write/read means (11) for writing the information from the input means (14) to the data storage means (20) and for reading the information from the data storage means (20);
d) display buffer means (21) for temporarily storing the information output from the write/read means (11), the display buffer means (21) including a segment display buffer means (58) and a dot matrix display buffer means (59);
e) display means (11) including a dot matrix display part (12) and a segment display part (13);
f) display control means (21) for selectively converting the information stored in the display buffer means (58, 59) into the information for display on the dot matrix display part (12) or the segment display part (13) and outputting the converted information to the appropriate display part (12, 13);
g) decision means (21) for outputting a signal when numeral information stored in the display buffer means (21) exceeds a predetermined number of digits; and
h) conversion means (21), responsive to the signal from the decision means (21), for converting the leading digits of the numeral information stored in said segment display buffer means (58), the number of which leading digits corresponds to said predetermined number, into the format suitable to dot matrix display for storing said leading digits into said dot matrix display buffer means (59) and for displaying the converted numeral information on the dot matrix display part (12), and simultaneously for displaying on the segment display part (13) the numeral information that remains exceeding said predetermined number of digits.

2. An electronic device according to Claim 1, wherein the said electronic device is composed of a portable small-sized electronic device (10), and the said display means (11) is composed of a liquid crystal display unit in which a dot matrix display portion (12), which is able to display a character and a numeral of up to 12 digits and a segment display portion (13) which is able to display a numeral and a symbol of up to 12 digits are arranged on upper and lower sides.

3. An electronic device according to Claim 1, wherein the conversion means (21) is provided with a data conversion circuit consisting of a shift register (ACC) for increasing 4-bit information to 8-bit information and two 4-bit latches for holding the increased 8-bit information.

4. An electronic device according to Claim 1, wherein the said data storage means (20) is composed of RAMs which store name information as character information and telephone number information as numeral information in a record of variable length.

## Patentansprüche

1. Elektronische Vorrichtung mit Rollfunktion, die folgendes aufweist:
a) eine Eingabeeinrichtung (14) zum Eingeben von Zeicheninformation, Zahleninformation und Befehlen;
b) eine Datenspeichereinrichtung (20) zum Abspeichern der Zeichen- und Zahleninformation in lesbarer Form;
c) eine Schreib/Lese-Einrichtung (11) zum Einschreiben der Information von der Eingabeeinrichtung (14) in die Datenspeichereinrichtung (20) und zum Lesen der Information aus der Datenspeichereinrichtung (20);
d) eine Anzeigepuffereinrichtung (21) zum Zwischenspeichern der von der Lese/Schreib-Einrichtung (11) ausgegebenen Information, wobei die Anzeigepuffereinrichtung (21) eine Segmentanzeige-Puffereinrichtung (58) und eine Punktmatrixanzeige-Puffereinrichtung (59) beinhaltet;
e) eine Anzeigeeinrichtung (11) mit einem Punktmatrix-Anzeigeteil (12) und einem Segmentanzeigeteil (13);
f) eine Anzeigesteuereinrichtung (21) zum selektiven Umsetzen der in der Anzeigepuffereinrichtung (58, 59) abgespeicherten Information in Information zum Darstellen im Punktmatrix-Anzeigeteil (12) oder im Segmentanzeigeteil (13) und zum Ausgeben der umgesetzten Information an den zweckdienlichen Anzeigeteil (12, 13);
g) eine Entscheidungseinrichtung (21) zum Eingeben eines Signals, wenn die in derAnzeigepuffereinrichtung (21) abgespeicherte Zahleninformation eine vorgegebene Stellenanzahl überschreitet und
h) eine Umsetzeinrichtung (21), die auf das Signal von der Entscheidungseinrichtung (21) anspricht, um die führenden Stellen der in der Segmentanzeigepuffer-Einrichtung (58) abgespeicherten Zahleninformation, bei der die Anzahl führender Stellen der vorgegebenen Anzahl entspricht, in das Format, das zur Punktmatrixanzeige geeignet ist, umzusetzen, um die führenden Stellen in die Punktmatrixanzeige-Puffereinrichtung (59) einzuspeichern, und um die umgesetzten Zahleninformation im Punktmatrix-Anzeigeteil (12) anzuzeigen, und zum gleichzeitigen Anzeigen der Zahleninformation im Segmentanzeigeteil (13), die über die vorgegebene Anzahl von Stellen hinaus zurück bleibt.

2. Elektronische Vorrichtung nach Anspruch 1, die aus einer tragbaren elektronischen Vorrichtung (10) mit kleinen Abmessungen besteht und bei der die Anzeigeeinrichtung (11) aus einer Flüssigkristalldisplay-Einheit besteht, in der ein Punktmatrix-Anzeigebereich (12), der Zeichen und Zahlen bis zu zwölf Stellen anzeigen kann, und ein Segmentanzeigebereich (13), der eine Zahl und ein Symbol mit bis zu zwölf Stellen anzeigen kann, oben und unten angeordnet sind.

3. Elektronische Vorrichtung nach Anspruch 1, bei der die Umsetzeinrichtung (21) mit einer Datenumsetzschaltung aus einem Schieberegister (ACC) zum Erweitern von 4-Bit-Information auf 8-Bit-Information und zwei 4-Bit-Latcheinrichtungen zum Zwischenspeichern der erweiterten 8-Bit-Information versehen ist.

4. Elektronische Vorrichtung nach Anspruch 1, bei der die genannte Datenspeichereinrichtung (20) aus RAMs besteht, die Namensinformation als Zeichen information sowie Telefonnummer-Information als Zahleninformation in einem Record variabler Länge speichern.

## Revendications

1. Dispositif électronique à fonction de défilement, le dispositif comprenant:
a) un moyen de saisie (14) pour introduire des informations sous forme de caractères, des informations sous forme de nombres et des instructions;
b) un moyen de mémorisation (20) de données pour stocker sous une forme pouvant être lue les informations sous forme de caractères et de nombres;
c) un moyen d'écriturellecture (11) pour inscrire dans le moyen de mémorisation (20) de données les informations du moyen de saisie (14) et pour extraire les informations du moyen de mémorisation (20) de données;
d) un moyen formant tampon (21) d'affichage pour stocker momentanément les informations de sortie du moyen d'écriture/lecture (11), le moyen formant tampon (21) d'affichage comprenant un moyen formant tampon (58) d'affichage par segments et un moyen formant tampon (59) d'affichage matriciel;
e) un moyen d'affichage (11) comprenant une partie (12) pour affichage matriciel et une partie (13) pour affichage par segments;
f) un moyen de commande (21) d'affichage pour convertir sélectivement les informations stockées dans les moyens formant tampons (58, 59) d'affichage en informations à afficher sur la partie (12) pour affichage matriciel ou sur la partie (13) pour affichage par segments et pour appliquer les informations converties à la partie appropriée (12, 13) pour affichage;
g) un moyen de décision (21) pour produire un signal lorsque les informations sous forme de nombres stockées dans le moyen formant tampon (21) d'affichage dépassent un nombre de chiffres prédéterminé; et
h) un moyen de conversion (21), réagissant au signal issu du moyen de décision (21), pour convertir les chiffres de tête des informations sous forme de nombres stockées dans ledit moyen formant tampon (58) d'affichage par segments, le nombre de ces chiffres de tête correspondant audit nombre prédéterminé, dans le format convenant à l'affichage matriciel pour stocker lesdits chiffres de tête dans ledit moyen formant tampon (59) pour affichage matriciel et pour afficher sur la partie (12) pour affichage matriciel les informations sous forme de nombres converties, et pour afficher simultanément sur la partie (13) pour affichage par segments les informations sous forme de nombres qui restent au-dessus dudit nomhre de chiffres prédéterminé.

2. Dispositif électronique selon la revendication 1, ledit dispositif électronique étant constitué par un dispositif électronique portatif (10) de petites dimensions, et ledit moyen d'affichage (11) étant constitué par un écran de visualisation à cristaux liquides dans lequel une partie (12) pour affichage matriciel, permettant d'afficher un caractère et un nombre comprenant jusqu'à 12 chiffres et une partie (13) pour affichage par segments qui permet d'afficher un nombre et un symbole comprenant jusqu'à 12 chiffres sont disposées sur les faces supérieure et inférieure.

3. Dispositif électronique selon la revendication 1, dans lequel le moyen de conversion (21) est pourvu d'un circuit de conversion de données constitué par un registre (ACC) à décalage pour agrandir des informations de 4 bits en informations de 8 bits et deux bascules de 4 bits pour contenir les informations agrandies de 8 bits.

4. Dispositif électronique selon la revendication 1, dans lequel ledit moyen (20) de mémorisation de données est composé de mémoires RAM qui mémorisent des informations de noms sous forme d'informations de caractères et des informations de numéros téléphoniques sous forme d'informations de nombres dans un enregistrement de longueur variable.
